# EUROPÄISCHE PATENTSCHRIFT

(11) **EP 1 145 900 B1**
(45) Veröffentlichungstag und Bekanntmachung des Hinweises auf die Patenterteilung: **19.11.2003**
(21) Anmeldenummer: 01109133.7
(22) Anmeldetag: 12.04.2001
(51) Int. Cl.: B60P 1/44

(54) **Ladevorrichtung für ein Transportfahrzeug**
Loading device for a transport vehicle
Dispositif de chargement pour véhicule de transport

(30) Priorität: 13.04.2000 DE 10018325
(43) Veröffentlichungstag der Anmeldung: 17.10.2001
(73) Patentinhaber: Robert Niehaus, 48477 Hörstel (DE)
(72) Erfinder: Robert Niehaus, 48477 Hörstel (DE)
(74) Vertreter: Schulze Horn, Kathrin

(56) Entgegenhaltungen:
- FR-A- 2 572 691
- US-A- 3 715 046
- US-A- 4 778 328

## Beschreibung

Die vorliegende Erfindung betrifft eine Ladevorrichtung zum Einbau in den Laderaum eines Transportfahrzeuges, insbesondere eines geschlossenen Kleintransporters, mit zwei vertikalen Führungssäulen und zwei horizontalen Tragschienen, wobei je eine Führungssäule und Tragschiene einander symmetrisch gegenüberliegend an zwei Längsseiten des Laderaums angeordnet und jeweils relativ zueinander verfahrbar miteinander verbunden sind, und mit einer horizontal angeordneten Ladeplattform, die an den Führungssäulen und Tragschienen getragen und in Horizontal- und Vertikalrichtung verfahrbar ist, wobei die Ladeplattform in ihrer Grundstellung im Inneren des Laderaums liegt und einen Teil des Laderaumbodens bildet und in ihrem Einsatz nach außerhalb des Laderaums verfahrbar ist.

Eine Ladevorrichtung der vorstehend genannten Art ist aus US-A-4 778 328 bekannt. Bei dieser Ladevorrichtung sind auf den beiden inneren Längswänden des Laderaums zwei teleskopierbare, relativ lange Schienen angebracht, an denen eine vertikale Führungssäule in Horizontalrichtung verfahrbar ist zwischen einer Position im Inneren des Fahrzeugs nahe dem vorderen Ende von dessen Laderaum und einer Position hinter dem Fahrzeug außerhalb des Laderaums. An den vertikalen Führungssäulen sind teleskopierbare Säulenteile vorgesehen, die nach unten hin ausfahrbar sind und die die Ladeplattform an ihrer dem Fahrzeug zugewandten Kante tragen. Als nachteilig wird bei dieser bekannten Ladevorrichtung angesehen, daß die im Fahrzeug angebrachten relativ langen horizontalen Schienen gegebenenfalls vorhandene seitliche Türen des Fahrzeugs blockieren, so daß diese dann nicht mehr für eine Be- und Entladung des Fahrzeugs nutzbar sind. Außerdem ist die Konstruktion dieser Ladevorrichtung mechanisch sehr aufwendig und umfaßt eine Vielzahl von Antriebsund Umlenkrollen und Gelenken sowie eine endlose Antriebskette, wodurch ein hoher Herstellungaufwand hervorgerufen wird. Außerdem besteht durch die vielen beweglichen Einzelteile eine erhöhte Gefahr für Störungen der Vorrichtung im Betrieb und es ist ein hoher Wartungsaufwand erforderlich. Schließlich ist noch als nachteilig zu erwähnen, daß die Ladeplattform nur an ihrer dem Fahrzeug zugewandten Kante mit den übrigen Teilen der Ladevorrichtung verbunden ist, so daß wegen der auftretenden großen Hebelkräfte die Belastbarkeit der Ladeplattform begrenzt ist oder eine sehr aufwendige und stabile Konstruktion gewählt werden muß, wenn die Ladeplattform auch relativ schwere Lasten tragen soll.

Es ist die Aufgabe der vorliegenden Erfindung, eine Ladevorrichtung für ein Transportfahrzeug zu schaffen, die konstruktiv einfach und robust ist, die schnell und einfach in ein Fahrzeug eingebaut werden kann, ohne daß an diesem konstruktive Veränderungen nötig sind und ohne daß Einschränkungen seiner Nutzung hingenommen werden müssen, die bei Bedarf ebenso schnell und einfach wieder ausgebaut werden kann und die einfach in Handhabung und Bedienung ist.

Die Lösung der Aufgabe erfolgt mit einer Ladevorrichtung der eingangs genannten Art, die dadurch gekennzeichnet ist,
- daß die zwei Führungssäulen im hinteren Bereich des Laderaums nahe einer rückseitigen Laderaumöffnung fest am Transportfahrzeug angebracht sind,
- daß an jeder Führungssäule diese zumindest teilweise umfassend jeweils ein Kreuzstück mittels einer Hubeinrichtung auf- und abbewegbar ist,
- daß jedes Kreuzstück eine horizontale Führung aufweist, in der jeweils eine der Tragschienen verschiebbar gelagert ist, und
- daß von jeder Tragschiene mindestens zwei Streben oder eine Seitenwand abhängen, an deren unteren Enden die Ladeplattform aufgehängt ist.

Die erfindungsgemäße Ladevorrichtung für ein Transportfahrzeug weist einen vorteilhaft einfachen und insbesondere in Fahrzeuglängsrichtung gesehen platzsparenden Aufbau auf, der die Vorrichtung sowohl kostengünstig in der Herstellung und Montage als auch robust und nützlich im Einsatz macht. Seitliche Türen des Laderaums bleiben dabei frei zugänglich und nutzbar. Die Führungssäulen beanspruchen nur wenig Platz und lassen sich, da sie nahe der hinteren Laderaumöffnung stehen, einfach an den dort bei jedem Transportfahrzeug vorhandenen stabilen Aufbauteilen des Fahrzeugs befestigen, bevorzugt an Fixpunkten für Zurrösen, Sicherheitsgurte oder dergleichen Elemente. Eingriffe in den Fahrzeugaufbau, die zu einem Erlöschen der Betriebserlaubnis führen könnten, werden so vermieden. In ihrer Grund- oder Ruhestellung befindet sich die Ladevorrichtung vollständig im Inneren des Laderaums des Fahrzeugs, so daß dessen äußere Maße nicht verändert werden. Im Ladeeinsatz wird die Ladeplattform mit Hilfe der Hubeinrichtung zunächst etwas angehoben und dann, im einfachsten Fall manuell durch eine Bedienungsperson, aus dem Laderaum herausgeschoben oder -gezogen. Danach wird sie mit Hilfe der Hubeinrichtung je nach Bedarf bis auf den Boden abgesenkt oder bis in die Höhe einer Laderampe angehoben. Ladegut wird dann auf die Ladeplattform gebracht und die Plattform wird mittels der Hubeinrichtung auf eine etwas über dem Laderaumboden liegende Höhe gebracht und dann wieder in das Fahrzeuginnere hinein bewegt. Nach Absenken der Ladeplattform auf den Laderaumboden ist die Ladeeinrichtung entlastet und gesichert. Das Ladegut kann während des Transports dort auf der Plattform verbleiben. Als Ladegut kommen insbesondere mittelgroße Stückgüter oder auf Paletten verladene Güter in Frage. Auch für das Ein- und Ausladen und Transportieren z.B. eines Krankenfahrstuhls oder Rollstuhls ist die erfindungsgemäße Ladevorrichtung gut geeignet, wobei in dieser Anwendung bevorzugt die erwähnten Seitenwände an der Plattform eingesetzt werden.

Als mit der erfindungsgemäßen Ladevorrichtung auszustattende Transportfahrzeuge sind mittelgroße Fahrzeuge in der Art eines Volkswagen-Transporters T4 oder auch eines Mercedes-Transporters oder ähnliche Fahrzeuge sowie Anhänger entsprechender Größe besonders geeignet. Aus Stabilitätsgründen sind die Führungssäulen zweckmäßig unten und oben mit dem Fahrzeugaufbau verbunden. Falls oben eine Befestigung nicht möglich ist, kann das obere Ende der Führungssäulen auch über je eine in Fahrzeuglängsrichtung angeordnete Schrägstütze abgefangen werden. Vorteilhaft ist bei der erfindungsgemäßen Ladevorrichtung eine einfache Nachrüstung oder ein einfaches Umsetzen von einem Fahrzeug in ein anderes Fahrzeug möglich, wobei erforderlichenfalls die vertikalen Führungssäulen verlängert oder verkürzt oder gegen solche einer anderen Länge getauscht werden können.

Zur Erhöhung der Belastbarkeit der Ladevorrichtung wird weiter vorgeschlagen, daß die vertikalen Führungssäulen durch eine obere Quertraverse zu einem Portal verbunden sind. Hierdurch wird insbesondere eine hohe Querstabilität erzielt.

Bevorzugt ist weiter vorgesehen, daß die Hubeinrichtung an der Quertraverse angebracht ist und eine oder zwei Seilwinden umfaßt, wobei die freien Enden der Seile an den Kreuzstücken befestigt sind. Eine Seilwinde ist einfach und robust und läßt sich ohne größeren Raumbedarf unterbringen. Sie ist vorzugsweise mit einem Elektromotor anzutreiben, der aus dem Fahrzeug-Stromnetz versorgbar ist, wobei die üblichen Bremsvorrichtungen und eine Selbsthemmung vorzusehen sind. Wenn nur eine Seilwinde eingesetzt wird, benutzt man zwei Seilenden, die an einer Seiltrommel befestigt sind und sich über entsprechende Umlenkungen zu beiden Kreuzstücken hin erstrecken. Alternativ sind auch andere Antriebselemente einsetzbar, wie z.B. Ketten oder Hubzylinder oder eine Spindelanordnung.

Zweckmäßig weist jedes Kreuzstück eine vertikale, die Führungssäule umfassende Führungsbuchse und eine horizontale, die Schiene umfassende Führungsbuchse auf, wobei jeweils die horizontale Führungsbuchse fahrzeuginnenseitig von der vertikalen Führungsbuchse angeordnet ist. Der Querschnitt der Führungssäulen und der Schienen kann geschlossen rechteckig oder rund sein; alternativ sind auch offene Profile, wie C- oder U-Profile dafür verwendbar, je nach dem, welche Fertigungsart bevorzugt ist und welche Belastungen aufgenommen werden sollen.

Zweckmäßig bestehen die Schienen aus mehreren Teilen, die ineinander teleskopierbar sind. Damit sind die Schienen in ihrem in das Fahrzeug eingeschobenen Zustand in ihrer Gesamtlänge kleiner. Sind solche Einschränkungen nicht vorhanden, kann auch eine einstückige Schiene verwendet werden, die kostengünstiger ist. Die Schienen gleiten in den Führungsbuchsen, wobei zur Reduzierung der für das Verschieben nötigen Kräfte Rollen- oder Kugelführungen vorgesehen sein können.

Je nach der Größe der zu bewegenden Lasten können die Schienen mit der Ladeplattform manuell durch eine Bedienungsperson oder mittels eines Kraftantriebes in ihren horizontalen Führungen verschiebbar sein.

Zweckmäßig weist jeweils die waagerechte Führungsbuchse unten einen durchgängigen Schlitz auf, durch den zumindest die hintere Strebe oder die Seitenwand bei horizontalem Verfahren der Ladeplattform hindurchläuft. Dies trägt dazu bei, die Gesamtlänge der Vorrichtung kompakt zu halten.

Zur Versteifung der Konstruktion ist vorgesehen, daß an jeder Längsseite der Ladeplattform jeweils eine vordere und eine hintere Strebe vorhanden ist, die durch je Längsseite mindestens eine Schrägstrebe miteinander verbunden sind, oder daß an jeder Längsseite der Ladeplattform jeweils eine Seitenwand in Form einer geschlossenen oder gitterförmigen Platte vorhanden ist.

Wenn die Ladeplattform befahren werden soll, weist diese zweckmäßig entweder nur an ihrer hinteren, vom Transportfahrzeug weg weisenden Kante oder an ihrer hinteren und ihrer vorderen Kante (je) eine Auf- und Abfahrschräge aufweist.

Damit eine einzelne Person, z.B. der Fahrer des Fahrzeugs, auch schwere Lasten handhaben kann, ist vorgesehen, daß die Ladeplattform mit eine Rollenbahn bildenden Rollen ausgestattet ist, die über die Oberseite der Plattform anhebbar und unter diese absenkbar sind oder die hinsichtlich ihrer Drehbarkeit freigebbar und arretierbar sind.

Aus dem gleichen vorstehend genannten Grund kann in weiterer Ausgestaltung im Laderaum auf dessen Boden in Fortsetzung der laderauminneren Position der Ladeplattform eine Rollenbahn angeordnet sein. Somit kann ein Ladegutstück von der Plattform weiter nach vorne in den Laderaum bewegt werden, wobei hierfür eine Person ausreicht. Selbstverständlich sind an der Rollenbahn die nötigen Mittel zur Sicherung des Ladeguts während der Fahrt vorzusehen.

Um die Ladevorrichtung auch für Lebensmitteltransporte geeignet zu machen, für die strenge hygienische Vorschriften gelten, ist für eine solche Anwendung bevorzugt vorgesehen, daß die Teile der Ladevorrichtung aus nichtrostendem Werkstoff, vorzugsweise Edelstahl, gefertigt sind.

Ein Ausführungsbeispiel der erfindungsgemäßen Ladevorrichtung an einem Transportfahrzeug wird nunmehr anhand einer Zeichnung näher beschrieben. Sie zeigt in
- Figur 1: eine perspektivische Ansicht einer Ladevorrichtung in ausgefahrenem, jedoch nicht abgesenktem Zustand der zugehörigen Ladeplattform, und in
- Figur 2: eine schematische Seitenansicht der Ladevorrichtung in verschiedenen Betriebsstellungen.

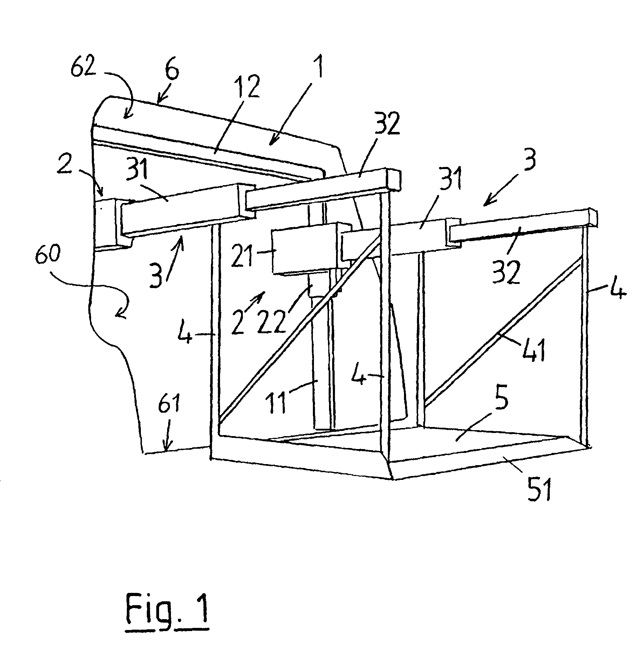

Unter Bezugnahme auf Figur 1 ist am hinteren Ende eines Laderaums 60 eines Transportfahrzeugs 6, von dem nur dessen hinterer Umriß mit einer Laderaumöffnung 62 in einer Linie angedeutet ist, ein Portal 1 fest im Fahrzeug 6 angebracht, welches in Ansicht allgemein die Form eines auf dem Kopf stehenden U hat. Das Portal 1 weist oben eine Quertraverse 12 auf, von deren seitlichen Enden zwei vertikale Führungssäulen 11 nach unten zum Laderaumboden 61 führen und dort festgelegt sind, wobei in der Zeichnung nur die rechte Säule 11 sichtbar ist. Zweckmäßig ist auch im Übergangsbereich der Führungssäulen 11 zu der Quertraverse 12 eine Befestigung am Fahrzeug 6 vorgesehen.

An jeder Führungssäule 11 ist vertikal verschiebbar ein Kreuzstück 2 angebracht, welches eine horizontale Führungsbuchse 21 mit rechteckigem Querschnitt und eine vertikale Führungsbuchse 22 ebenfalls mit rechteckigem Querschnitt aufweist. In jeder horizontalen Führungsbuchse 21 ist je eine Schiene 3 horizontal verschiebbar geführt. Jede Schiene 3 besteht hier aus zwei Teilen 31 und 32, die ineinander teleskopierbar sind.

Von den beiden Teilen 32 der Schienen 3 gehen je zwei Streben 4 nach unten ab. Dabei sind die oberen Enden der Streben 4 an dem Schienenteil 32 festgelegt. Um die gegenseitige Verschiebung nicht zu behindern, weisen die Schienenteile 31 unten je einen durchgehenden Schlitz für die Streben 4 auf.

Es ist weiter auf jeder Seite je eine Schrägstrebe 41 vorhanden, die die beiden Streben 4 einer Seite miteinander verbindet.

An den vier unteren Enden der Streben 4 ist eine Ladeplattform 5 waagerecht angebracht, die mittels der Schienen und Säulen horizontal und vertikal verfahrbar ist. Zur Erleichterung eines Befahrens der Plattform 5 weist diese außen, d.h. an ihrer vom Fahrzeug 6 weg weisenden Kante eine Auf- und Abfahrschräge 51 auf.

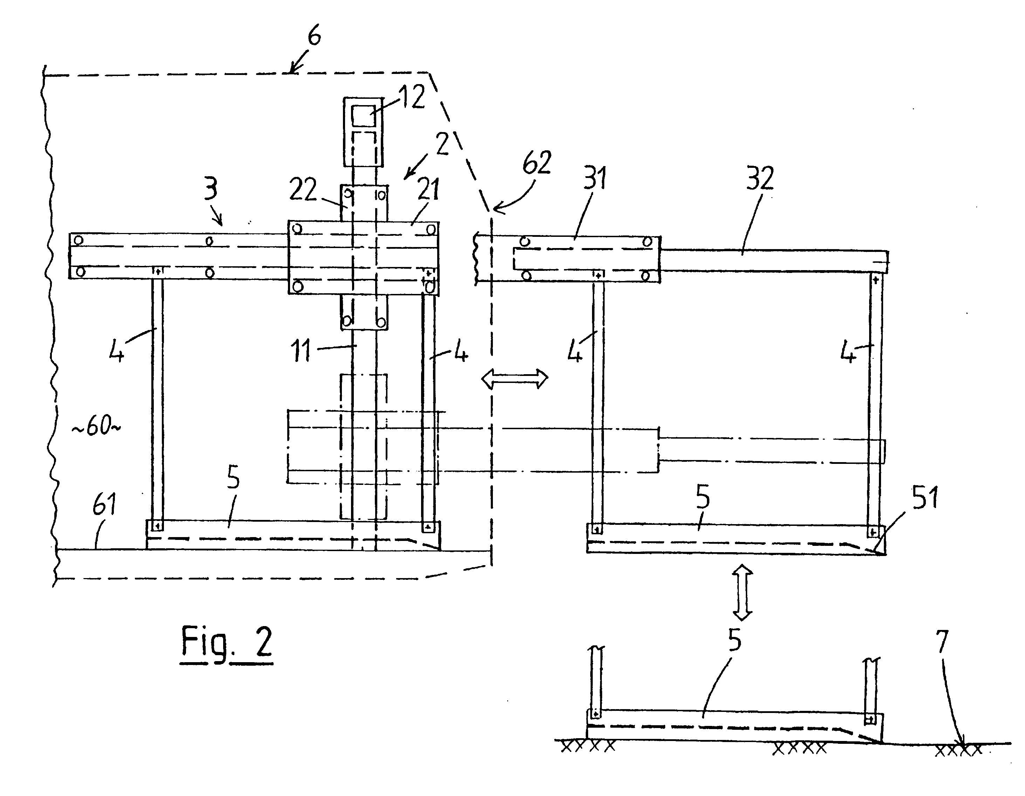

In Figur 2 der Zeichnung ist die Ladevorrichtung in verschiedenen Betriebsstellungen in Seitenansicht dargestellt, wobei hier die kompakte Bauweise, insbesondere in Fahrzeuglängsrichtung, besonders deutlich wird. Im linken Teil der Zeichnung sind die Schienen 3 mit jeweils den beiden Teilen 31 und 32 ineinander geschoben. Die an den Streben 4 hängende Ladeplattform 5 liegt dabei auf dem Laderaumboden 61 des Laderaums 60 des Fahrzeugs 6 auf. Es ist weiter das Kreuzstück 2 mit der horizontalen Führung 21 und der vertikalen Führung 22 dargestellt. Die erforderliche Hubeinrichtung für die Kreuzstücke, z.B. eine Seilwinde, ist nicht eigens eingezeichnet, da sie dem Fachmann bekannt ist. Sie ist zweckmäßig oben an den Führungssäulen 11 oder an der Quertraverse 12 angebracht.

Rechts in der Figur 2 ist der ausgefahrene Zustand der Ladeplattform 5 außerhalb des Laderaums 60 dargestellt, wobei die beiden Teile 31 und 32 der Schienen 3 nun auseinandergezogen sind. Dazu dienen Rollen im Teil 31, die durch Kreise angedeutet sind und die die Reibung auf ein Minimum reduzieren. In diesem Zustand werden nunmehr die Kreuzstücke 2 mittels der Hubeinrichtung abgesenkt, was durch die strichpunktierten Linien angedeutet ist. Nach der Absenkung liegt die Ladeplattform 5 auf einer Fahrbahn 7 auf und kann be- oder entladen werden. Bei Bedarf kann die Ladeplattform 5 auch auf eine zu einer Laderampe passende Höhe verfahren werden.

## Patentansprüche

1. Ladevorrichtung zum Einbau in den Laderaum (60) eines Transportfahrzeuges (6), insbesondere eines geschlossenen Kleintransporters, mit zwei vertikalen Führungssäulen (11) und zwei horizontalen Tragschienen (3), wobei je eine Führungssäule (11) und Tragschiene (3) einander symmetrisch gegenüberliegend an zwei Längsseiten des Laderaums (60) angeordnet und jeweils relativ zueinander verfahrbar miteinander verbunden sind, und mit einer horizontal angeordneten Ladeplattform (5), die an den Führungssäulen (11) und Tragschienen (3) getragen und in Horizontal- und Vertikalrichtung verfahrbar ist, wobei die Ladeplattform (5) in ihrer Grundstellung im Inneren des Laderaums (60) liegt und einen Teil des Laderaumbodens (61) bildet und in ihrem Einsatz nach außerhalb des Laderaums (60) verfahrbar ist ,
**dadurch gekennzeichnet,**
- **daß** die zwei Führungssäulen (11) im hinteren Bereich des Laderaums (60) nahe einer rückseitigen Laderaumöffnung (62) fest am Transportfahrzeug (6) angebracht sind,
- **daß** an jeder Führungssäule (11) diese zumindest teilweise umfassend jeweils ein Kreuzstück (2) mittels einer Hubeinrichtung auf- und abbewegbar ist,
- **daß** jedes Kreuzstück (2) eine horizontale Führung (21) aufweist, in der jeweils eine der Tragschienen (3) verschiebbar gelagert ist, und
- **daß** von jeder Tragschiene (3) mindestens zwei Streben (4) oder eine Seitenwand abhängen, an deren unteren Enden die Ladeplattform (5) aufgehängt ist.

2. Ladevorrichtung nach Anspruch 1, **dadurch gekennzeichnet, daß** die vertikalen Führungssäulen (11) durch eine obere Quertraverse (12) zu einem Portal (1) verbunden sind.

3. Ladevorrichtung nach Anspruch 2, **dadurch gekennzeichnet, daß** die Hubeinrichtung an der Quertraverse (12) angebracht ist und eine oder zwei Seilwinden umfaßt, wobei die freien Enden der Seile an den Kreuzstücken (2) befestigt sind.

4. Ladevorrichtung nach Anspruch 1, 2 oder 3, **dadurch gekennzeichnet, daß** jedes Kreuzstück (2) eine vertikale, die Führungssäule (11) umfassende Führungsbuchse (22) und eine horizontale, die Schiene (3) umfassende Führungsbuchse (21) aufweist, wobei jeweils die horizontale Führungsbuchse (21) fahrzeuginnenseitig von der vertikalen Führungsbuchse (22) angeordnet ist.

5. Ladevorrichtung nach einem der vorhergehenden Ansprüche, **dadurch gekennzeichnet, daß** jede Schiene (3) aus mehreren Teilen (31, 32) besteht, die ineinander teleskopierbar sind.

6. Ladevorrichtung nach einem der vorhergehenden Ansprüche, **dadurch gekennzeichnet, daß** die Schienen (3) mit der Ladeplattform (5) manuell durch eine Bedienungsperson oder mittels eines Kraftantriebes in ihren horizontalen Führungen (21) verschiebbar sind

7. Ladevorrichtung nach einem der Ansprüche 4 bis 6, **dadurch gekennzeichnet, daß** die horizontale Führungsbuchse (21) unten einen durchgängigen Schlitz aufweist, durch den zumindest die hintere Strebe (4) oder die Seitenwand bei horizontalem Verfahren der Ladeplattform (5) hindurchläuft.

8. Ladevorrichtung nach einem der vorhergehenden Ansprüche, **dadurch gekennzeichnet, daß** an jeder Längsseite der Ladeplattform (5) jeweils eine vordere und eine hintere Strebe (4) vorhanden ist, die durch je Längsseite mindestens eine Schrägstrebe (41) miteinander verbunden sind, oder daß an jeder Längsseite der Ladeplattform (5) jeweils eine Seitenwand in Form einer geschlossenen oder gitterförmigen Platte vorhanden ist.

9. Ladevorrichtung nach einem der vorhergehenden Ansprüche, **dadurch gekennzeichnet, daß** die Ladeplattform (5) nur an ihrer hinteren, vom Transportfahrzeug (6) weg weisenden Kante oder an ihrer hinteren und ihrer vorderen Kante eine Auf- und Abfahrschräge (51) aufweist.

10. Ladevorrichtung nach einem der vorhergehenden Ansprüche, **dadurch gekennzeichnet, daß** die Ladeplattform (5) mit eine Rollenbahn bildenden Rollen ausgestattet ist, die über die Oberseite der Ladeplattform (5) anhebbar und unter diese absenkbar sind oder die hinsichtlich ihrer Drehbarkeit freigebbar und arretierbar sind.

11. Ladevorrichtung nach Anspruch 10, **dadurch gekennzeichnet, daß** im Laderaum (60) auf dessen Boden (61) in Fortsetzung der laderauminneren Position der Ladeplattform (5) eine Rollenbahn angeordnet ist.

12. Ladevorrichtung nach einem der vorhergehenden Ansprüche, **dadurch gekennzeichnet, daß** die Teile der Ladevorrichtung aus nichtrostendem Werkstoff, vorzugsweise Edelstahl, gefertigt sind.

## Claims

1. Loading equipment for installation in the goods area (60) of a goods vehicle (6), especially a closed small goods vehicle, with two vertical guide columns (11) and two horizontal load-bearing runners (3), in which one guide column (11) and one load-bearing runner (3) are each positioned symmetrically and opposite to the other on each of the two longitudinal sides of the goods area (60) and each are linked with each other and can be moved relative to each other and relative to a horizontally arranged loading platform (5) which is carried by the guide columns (11) and load-bearing runners (3) and can be moved horizontally and vertically, wherein the basic position of the loading platform (5) is in the inner part of the goods area (60) and forms a part of the floor of the goods area (61) and can be moved outside the goods area (60) when in use,
and **characterised in that**
- the two guide columns (11) are attached solidly to the goods vehicle (6) in the rear part of the goods area (60) near to an opening in the rear side of the goods area (62),
- on each guide column (11) a cross-piece (2), which surrounds the guide column (11) at least in part, can be moved upwards and downwards by means of lifting equipment,
- each cross-piece (2) has a horizontal guide (21) in which one of the load-bearing runners (3) is positioned in such a way that it can slide, and
- from each load-bearing runner at least two struts (4) or a side wall are suspended, on the lower ends of which the loading platform (5) is supported

2. Loading equipment according to claim 1 **characterised in that** the vertical guide columns (11) are linked to a gantry (1) by an upper cross-arm (12)

3. Loading equipment according to claim 2 **characterised in that** the lifting equipment is attached to the cross-arm (12) and includes one or two cable windlasses and where the free ends of the cables are attached to the cross-piece (2).

4. Loading equipment according to claims 1, 2 or 3 **characterised in that** each cross-piece (2) has a vertical guide sleeve (22) surrounding the guide column (11) and a horizontal guide sleeve (21) surrounding the runner whereby the horizontal guide sleeve (21) is arranged on the inside of the vehicle in relation to the vertical guide sleeve (22).

5. Loading equipment according to one of the foregoing claims **characterised in that** each runner (3) consists of several components (31, 32) which can be telescoped into each other.

6. Loading equipment according to one of the foregoing claims **characterised in that** the runners (3), along with the loading platform (5), can be moved in their horizontal guides (21) manually by an operator or by a mechanical drive.

7. Loading equipment according to one of the claims 4 to 6 **characterised in that** the horizontal guide sleeve (21) has a continuous slot in its lower portion through which at least the rear strut (4) or the side wall runs when the loading platform (5) is moved horizontally.

8. Loading equipment according to one of the foregoing claims **characterised in that** there is a front and rear strut (4) on each longitudinal side of the loading platform (5) which are joined on each longitudinal side by at least one diagonal brace (41) or **in that** each side of the loading platform (5) has a side wall in the form of a plate which is either solid or in the form of a grid.

9. Loading equipment according to one of the foregoing claims **characterised in that** the loading platform (5) has a ramp (51) suitable for wheeled traffic only at its rear side away from the goods vehicle (6) or at its front and rear side.

10. Loading equipment according to one of the foregoing claims **characterised in that** the loading platform (5) is equipped with rollers forming a roller conveyor, the rollers of which can be raised above the upper side of the loading platform (5) or lowered below it or the rotation of which can be either locked or allowed to move freely.

11. Loading equipment according to claim 10 **characterised in that** a roller conveyor is installed in the floor (61) of the goods area (60) as a continuation of the internal position of the loading platform (5) in the inside of the goods area.

12. Loading equipment according to one of the foregoing claims **characterised in that** the components of the loading equipment are made from corrosion-resistant material, preferably stainless steel.

## Revendications

1. Dispositif de chargement à monter dans le compartiment de chargement (60) d'un véhicule de transport (6), en particulier d'un petit véhicule de transport fermé, avec deux colonnes de guidage verticales (11) et deux rails porteurs horizontaux (3) - une colonne de guidage (11) et un rail porteur (3) étant respectivement disposés symétriquement opposés l'un par rapport à l'autre au niveau de deux grands côtés du compartiment de chargement (60) et respectivement reliés l'un à l'autre de façon relativement mobile - ainsi qu'avec une plate-forme de chargement (5) disposée horizontalement, soutenue au niveau des colonnes de guidage (11) et des rails porteurs (3) et mobile dans le sens horizontal et vertical ; la plate-forme de chargement (5) se trouve, en position de base, à l'intérieur du compartiment de chargement (60) et constitue une partie du sol du compartiment de chargement (61) et peut être déplacée vers l'extérieur du compartiment de chargement (60) lors de son utilisation, **caractérisé en ce que**,
- les deux colonnes de guidage (11) sont fixées au véhicule de transport (6) au niveau de la partie arrière du compartiment de chargement (60), à proximité d'une ouverture du compartiment de chargement à l'arrière (62),
- au niveau de chaque colonne de guidage (11), un croisillon (2), qui entoure celles-ci au moins partiellement, peut être monté ou descendu au moyen d'un mécanisme d'élévation de charge,
- chaque croisillon (2) dispose d'un guidage horizontal (21) dans lequel un des rails porteurs (3) est logé de façon à pouvoir coulisser et
- à chaque rail porteur (3) sont associés au moins deux étais (4) ou un panneau latéral aux extrémités inférieures desquels est accrochée la plate-forme de chargement.

2. Dispositif de chargement selon la revendication 1 **caractérisé en ce que** les colonnes de guidage verticales (11) sont reliées à un portique (1) par une traverse supérieure (12).

3. Dispositif de chargement selon la revendication 2 **caractérisé en ce que** le mécanisme d'élévation de charge est monté sur la traverse (12) et **en ce qu'**il comporte un ou deux treuils à câble, les extrémités libres des câbles étant accrochées aux croisillons (2).

4. Dispositif de chargement selon la revendication 1, 2 ou 3 **caractérisé en ce que** chaque croisillon (2) dispose d'un canon de guidage (22) vertical entourant la colonne de guidage (11) et d'un canon de guidage (21) horizontal entourant le rail (3) ; le canon de guidage horizontal (21) étant respectivement disposé côté intérieur du véhicule en partant du canon de guidage vertical (22).

5. Dispositif de chargement selon l'une des revendications précédentes **caractérisé en ce que** chaque rail (3) est composé de plusieurs parties (31, 32) pouvant s'emboîter l'une dans l'autre de façon télescopique.

6. Dispositif de chargement selon l'une des revendications précédentes **caractérisé en ce que** les rails (3) peuvent être coulissés manuellement, avec la plate-forme de chargement (5) dans leurs guidages horizontaux (21), par un opérateur ou au moyen d'un servomoteur.

7. Dispositif de chargement selon l'une des revendications 4 à 6 **caractérisé en ce que** le canon de guidage horizontal (21) présente en dessous une fente débouchante à travers laquelle passe au moins l'étai (4) arrière ou le panneau latéral lorsque la plate-forme de chargement (5) est déplacée horizontalement.

8. Dispositif de chargement selon l'une des revendications précédentes **caractérisé en ce que**, au niveau de chaque grand côté de la plate-forme de chargement (5) se trouve un étai (4) avant et un étai (4) arrière, reliés l'un à l'autre sur chaque grand côté par au moins un étai oblique (41) ou **en ce que**, au niveau de chaque grand côté de la plate-forme de chargement (5) se trouve un panneau latéral sous forme d'une plaque fermée ou en treillis.

9. Dispositif de chargement selon l'une des revendications précédentes **caractérisé en ce que** la plate-forme de chargement (5) dispose d'un chanfrein d'avance et de retrait uniquement au niveau de son bord arrière, incliné vers l'extérieur du véhicule de transport (6), ou bien au niveau de son bord avant et de son bord arrière.

10. Dispositif de chargement selon l'une des revendications précédentes **caractérisé en ce que** la plate-forme de chargement (5) est équipée de rouleaux formant un transrouleur qui peuvent être levés au-dessus de la partie supérieure de la plate-forme de chargement (5) et abaissés au-dessous de celle-ci ou qui peuvent être bloqués et libérés pour sa rotation.

11. Dispositif de chargement selon la revendication 10 **caractérisé en ce qu'**un transrouleur est placé dans le compartiment de chargement (60), sur le sol (61) de celui-ci, dans le prolongement de la position à l'intérieur du compartiment de chargement de la plate-forme de chargement (5).

12. Dispositif de chargement selon l'une des revendications précédentes **caractérisé en ce que** les éléments du dispositif de chargement sont fabriqués en matériau inoxydable, de préférence en acier spécial.
